(19) Europäisches Patentamt / European Patent Office / Office européen des brevets

(11) **EP 4 488 328 A1**

(12) **EUROPEAN PATENT APPLICATION**

(43) Date of publication:
**08.01.2025 Bulletin 2025/02**

(21) Application number: **23183173.6**

(22) Date of filing: **03.07.2023**

(51) International Patent Classification (IPC):
***C08L 23/00*** *(2006.01)*

(52) Cooperative Patent Classification (CPC):
(C-Sets available)
**C08L 23/0815;** C08L 2203/16; C08L 2205/06; C08L 2310/00 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ingenia Polymers International S.A.**
**2520 Luxenbourg (LU)**

(72) Inventors:
- **CHARLTON, J. Zachariah**
  **Burlington, ON N3T 5M2 (CA)**
- **SCHNEIDER, Alyssa**
  **Hamilton, ON L8R 1X3 (CA)**
- **AREFI, Ahmad**
  **Hamilton, ON L8S 1A9 (CA)**
- **GIAMMARIA, Paul Marco**
  **Hamilton, ON L9C 2L1 (CA)**
- **GRITSICHINE, Vladimir**
  **Richmond Hill, ON L4C 9R7 (CA)**
- **TZOGANAKIS, Costas**
  **Waterloo, ON N2V 2S6 (CA)**

(74) Representative: **Tomkins & Co**
**5 Dartmouth Road**
**Dublin 6, D06 F9C7 (IE)**

(54) **FLUORINE-FREE AND SILICONE-FREE POLYMER PROCESSING AIDS**

(57) The present invention relates to polymer processing aid compositions for polyolefins, their methods of manufacture and articles made from the compositions as well as use of the compositions for the removal or reduction of sharkskin melt fracture or reduction in the formation of die lip build-up. Compositions of the present invention may also be substantially free of fluorine and in some embodiments substantially free of siloxane.

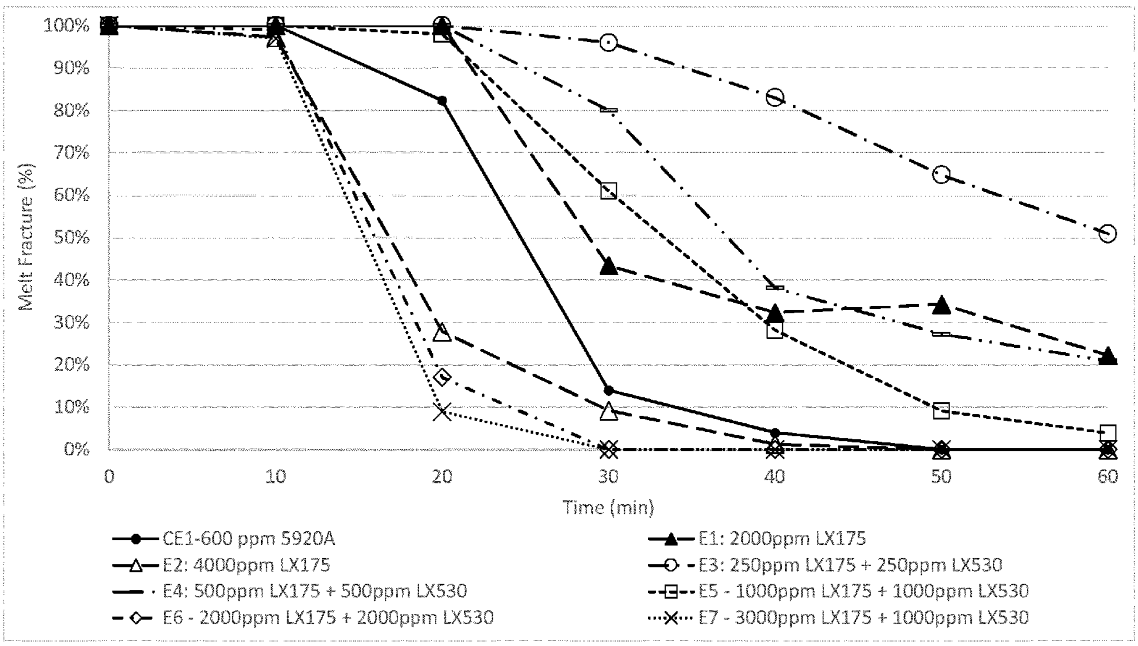


Figure 1



EP 4 488 328 A1

(52) Cooperative Patent Classification (CPC): (Cont.)

C-Sets
**C08L 23/00, C08L 67/00;**
**C08L 23/0815, C08L 67/02;**
**C08L 23/0815, C08L 67/04;**
**C08L 23/0815, C08L 67/04, C08L 67/02**

## Description

### Technical Field

The present invention relates to the application of polyesters and polyester copolymers as polymer processing aids (PPAs) in polyolefin extrusion, including film extrusion.

### Background

Industrial polyolefin melt processes - including blown film, cast film, sheet extrusion, profile extrusion, blow molding, wire and cable extrusion coating, and fibre spinning - desire high throughputs in order to reduce costs associated with such processing. However, elevating polyolefin extrusion rates above a critical wall shear stress can lead to the onset of flow instabilities which manifest themselves as distortions of the extruded product. Hatzikiriakos, S. G., & Migler, K. B. (2012), Polymer Processing Additives for Melt Fracture Control in "Applied Polymer Rheology: Polymeric Fluids with Industrial Applications", First Edition, pp 29-58, describes a range of melt extrusion instabilities observed in industry. Above a critical volumetric flow rate, polyolefin extrusions exhibit distortions which increase in severity as the flow rate increases. These distortions are collectively referred to as *"melt fracture".* Above a first critical shear stress the polyolefin extrudate exhibits *"surface melt fracture",* also called *"sharkskin".* Sharkskin appears as a regular pattern of surface roughness causing haze which is undesirable and limits the rate of extrusion. Extrusion at still higher rates can lead to a stick-slip instability or *"oscillating melt fracture".* Extrusion at even higher rates leads to gross, irregular distortions in the extrudate known as *"gross melt fracture".*

*"Polymer Processing Aids"* ("PPAs") are well known to those skilled in the art of polyolefin extrusion and film processing. The addition of low concentrations of PPAs to the polyolefin melt increases the critical shear stress at which sharkskin occurs, allowing for higher throughput rates without the onset of sharkskin. Heretofore, fluoroelastomers and fluoroplastics (collectively "fluoropolymers") have been the established PPA solution to sharkskin in polyolefin extrusion processes.

US Patent No. 3,125,547 discloses compositions of 0.005 to 2 wt.-% fluoropolymer in polyolefins. The compositions are effective in removing sharkskin from film and tube extrusions as compared to extrusions of the same polyolefins absent the fluoropolymer.

US Patent No. 4,855,360 discloses polyolefin compositions containing minor amounts of fluoropolymers in combination with a poly(oxyalkylene) polymer. Preferred poly(oxyalkylene) polymers disclosed are polyethylene glycols (PEG; CAS#: 25322-68-3) with a molecular weight of 1,000 to 20,000 g/mol. Such compositions show a synergistic effect of the poly(oxyalkylene) with the fluoropolymers of the invention. The examples of that document demonstrate that the combination of fluoropolymer and PEG shift the onset of melt fracture to higher shear rates than for fluoropolymer or PEG alone, reduce the time to remove melt fracture in blown film processing at a given apparent shear rate and reduce the pressure drop across the blown film die. The compositions allow lower use of fluoropolymer with poly(oxyalkylene) as compared to the use of fluoropolymer alone.

US Patent No. 6,642,310 discloses improved PPA efficiency through the use of dispersed fluoropolymer particles of a minimum particle size of 2 micron and the use of interfacial agents to help achieve the target particle size. Silicone-polyether, aromatic polyester and aliphatic polyesters including polylactic acid (PLA) and polycaprolactone (PCL; CAS#: 24980-41-4), among other materials are disclosed as useful interfacial agents. The use of PCL as an interfacial agent with improved temperature resistance, compared to poly(oxyalkylene), is disclosed.

Fluoropolymer PPAs, often formulated in combination with a synergist, are effective at low concentrations. In addition to delaying the onset of sharkskin to higher extrusion rates, such compositions can reduce extrusion pressure and extruder torque at a given output and can help reduce die lip build up (also called die drool). However, the use of fluoropolymers as polymer processing aids is now undesirable due to regulatory and market developments requiring the removal of per- and poly-fluoroalkyl substances ("PFAS") from polyolefins. Thus, there is a need for a fluorine-free alternative PPA to eliminate sharkskin melt fracture.

US Patent No. 4,535,113 discloses a composition of a polyolefin and a silicone additive. The silicone additive is a poly(dimethyl siloxane) ("PDMS") copolymer where the comonomer consists of a siloxane substituted with at least one pendant ethylene oxide, vicinal epoxy or amino group in a concentration sufficient to improve optical or mechanical properties. The compositions are shown to reduce melt fracture and pin striping where the silicone additive is present at 0.05% of the composition. However, no comparison to fluoropolymer PPAs is provided.

US Patent No. 5,789,473 discloses a polyolefin composition containing 0.01 to 1 wt.-% of a hydroxy-functional di-organosiloxane having a molecular weight of at least 40,000 g/mol. The formulations of the invention are shown to reduce surface roughness of a film produced on a slit die as compared to controls not containing PPA additives and compared to conventional fluoroelastomer PPAs.

Silicones and poly(dialkyl siloxane) copolymers are viable alternatives to fluoropolymers as PPAs for polyolefins.

However, some applications now require siloxane free alternatives. Thus, there is a need for a fluorine-free, siloxane-free alternative PPA to eliminate sharkskin melt fracture.

US Patent No. 10,982,079 B2 discloses the use of a poly(oxyalkylene) polymer with a molecular weight of at least 50,000 g/mol., optionally with a second poly(oxyalkylene) polymer of up to 20,000 g/mol., molecular weight and a metal salt of carbonylic acid, sulfonic acid, or alkylsulfate. The use of certain metal salts is demonstrated to improve the thermal stability of the poly(oxylalkylene) polymers. Examples demonstrate that high molecular weight PEG with zinc stearate in a concentration range of 300 to 1200 ppm in polyethylene are effective in clearing melt fracture. The inclusion of a second, lower molecular weight PEG improves performance. The disclosed formulations are not as effective in clearing melt fracture as fluoropolymer PPAs. The effect of the PEG on the specific output of the extruder (output/RPM) and properties of the films is not disclosed.

US Patent application 2023/003100 A1 discloses the use of 200 to 10,000 ppm of a combination of sorbitan ester or polysorbate with either or both of a metal salt of a fatty acid and PEG having a molecular weight of less than 40,000 g/mol as a PPA for polyolefins. Examples disclose the use of combinations of polysorbate 60 with either of both of zinc stearate and PEG having a molecular weight of 8,000 g/mol and demonstrate their performance in blown film time-to-clear studies. The inventors disclose that output rates vary by 30% or less and do not disclose the effect of the formulations on the specific output of the extruder or extrusion stability.

The foregoing disclosures suggest that PEG, stearates and polysorbates can be effective in removing sharkskin. However, the use of stearates is known to contribute to die lip buildup and may affect printing on polyolefin films when used at high levels. High levels of PEG may also contribute to die-lip buildup and printing issues.

US Patent 8,283,415 B2 discloses a blend of poly(hydroxy carboxylic acid) and polyethylene prepared with a single-site catalyst. The blends are meant to combine the sustainable features of poly(hydroxy carboxylic acid) such as PLA that can be obtained from renewable sources, with the superior physical properties of polyethylene. The inventors note that combinations of PLA with PE obtained from a single site catalyst have superior properties and do not need a compatibilizer to achieve good physical properties. While the inventors claim composition of 0.1 to 50% poly(hydroxy carboxylic acid), the single example uses 20% PLA in a metallocene PE, which is in the typical range of a polymer blend. Results in the range of 0.1 to 1% PLA are not provided, results for poly(hydroxy carboxylic acid) other than PLA are not provided, and no study of the effect of such blends on the processability of the blends or its effect on melt fracture is provided.

Thus, there is a need for a substantially fluorine-free, siloxane-free, alternative PPA to eliminate sharkskin melt fracture. There is a further need for such a PPA to minimize any reduction in extruder output due to slippage or surging of the extrusion screw. Ideally, such a PPA will increase specific output of the extruder due to pressure reduction on the die without causing screw slippage. There is a further need for such a PPA to minimize the formation of die-lip buildup in extrusion processes and to have minimal negative effects on physical properties of films including printability.

## Object of the Invention

Regulatory and market developments require an alternative to fluoropolymer and silicone PPAs. There is a requirement for a substantially fluorine -free, siloxane-free polymer processing aid for polyolefins which can delay the onset of sharkskin melt fracture to higher extrusion rates. There is a further need for such non-fluorinated PPA to be effective at low concentrations. In food contact applications it is also required for the PPA to be compliant with food contact regulations in the jurisdictions in which it is sold. It can also be desirable for the PPA to be generated from renewable resources. The PPAs of the present invention meet one or more of these objectives.

## Summary of the Invention

The present invention relates to polymer processing aid compositions for polyolefins, their methods of manufacture and articles made from the compositions as well as use of the compositions for the removal or reduction of sharkskin melt fracture or reduction in the formation of die lip build-up. Compositions of the present invention may also be substantially free of fluorine and in some embodiments substantially free of siloxane.

The invention provides use of a first polyester or polyester copolymer as a polymer processing aid to remove or reduce melt fracture or reduce the formation of die lip build-up in a polyolefin composition, wherein the polymer processing aid is used in an amount of from 0.01 to 1.0 weight-%, based on the total weight of the polyolefin composition. Suitably the polymer processing aid is used in an amount of from 0.05 to 0.7 weight-%, preferably in an amount of from 0.1 to 0.5 weight-%, most preferably in an amount of from 0.2 to 0.4 weight% based on the total weight of the polyolefin composition.

In another aspect the invention provides a method to remove or reduce melt fracture or reduce the formation of die lip build-up in a polyolefin extrusion process comprising using a first polyester or polyester copolymer as a polymer processing aid wherein the polymer processing aid is used in an amount of from 0.01 to 1 weight-%, based on the total weight of the polyolefin composition. Suitably the polymer processing aid is used in an amount of from 0.05 to 0.7 weight-%,

preferably in an amount of from 0.1 to 0.5 weight-%, most preferably in an amount of from 0.2 to 0.4 weight% based on the total weight of the polyolefin composition.

In yet another aspect the invention provides a composition comprising a polyolefin; and a polymer processing aid present in an amount of from 0.01 to 1.0 weight-% based on the total weight of the polyolefin composition. Suitably the polymer processing aid is used in an amount of from 0.05 to 0.7 weight-%, preferably in an amount of from 0.1 to 0.5 weight-%, most preferably in an amount of from 0.2 to 0.4 weight%, based on the total weight of the polyolefin composition.

Also provided is a masterbatch composition comprising a polyolefin; and a polymer processing aid, the aid being present in an amount of from 1 to 45 weight-% based on the total weight of the polyolefin composition and wherein the polymer processing aid comprises a first polyester or polyester copolymer. These higher concentration range compositions, called masterbatches, are useful as an intermediate material to prepare the final extrudable composition. Such uses are well known to those of skill in the art. Suitably the masterbatch composition is let down in a base polymer to achieve an extrudable composition containing the polymer processing aid in an amount of from 0.05 to 0.7 weight-%, preferably in an amount of from 0.1 to 0.5 weight-%, most preferably in an amount of from 0.2 to 0.4 weight% based on the total weight of the polyolefin composition.

The use, method or composition described above may further comprise the use of a second polyester or polyester copolymer as part of the processing aid, the second polyester or polyester copolymer having a lower viscosity (as indicated by the Melt Flow Rate) than the first polyester or polyester copolymer, wherein the first and second polyester or polyester copolymer are used in a combined amount of from 0.01 to 1 weight-%, based on the total weight of the extrudable polyolefin composition. Viscosity of a polymer can be measured at a range of shear rates and temperatures by a capillary or rotational rheometer as is known in the art, but can be readily assessed at a single condition according the Melt Flow Rate (MFR, ASTM D1238). A higher MFR indicates a lower viscosity. The second polyester should have a MFR that is at least 5% higher, suitably 10% higher, and preferably at least 20% higher, when measured under the same standard ASTM D1238 test conditions as the first polyester. In some embodiments the PPA is present in an amount of about 0.01 to 1 weight-%in the polyolefin composition. Such compositions are extrudable compositions useful in polyolefin extrusion processes including blown film, cast film, sheet extrusion, profile extrusion, wire and cable extrusion, and extrusion blow moulding. They are useful in the final extrusion process to remove or delay the onset of sharkskin, and to reduce die-lip buildup or reducing pressure drop across an extrusion die. Such compositions are useful in removing sharkskin under a given shear rate condition or delaying sharkskin to higher extrusion flow rates as compared to polyolefins without the polyester or polyester copolymer. In other embodiments the PPA is present in an amount of about 1 to 45 weight-% in a carrier polymer, from example from 2 to 40%, preferably 3 to 30 weight %, and more preferably 5 to 25% wt, based on the total weight of the composition. The higher concentration range compositions, called masterbatches, are useful as an intermediate material to prepare the final extrudable composition. Such uses are well known to those of skill in the art.

The first polyester or polyester copolymer may have a molecular weight of greater than 1000 g/mol. Suitably the first polyester or polyester copolymer may have a molecular weight of greater than 5,000 g/mol, preferably greater than 10,000 g/mol, for example greater than 50,000 g/mol, or greater than 100,000 g/mol.

In some embodiments either the first polyester or polyester copolymer or the second polyester or polyester copolymer or both may be a poly(lactic acid) ("PLA"). The poly(lactic acid) may comprise greater than 80% of the L-isomer of lactic acid or lactide monomer.

In some embodiments either the first polyester or polyester copolymer or the second polyester or polyester copolymer or both may be a poly(hydroxy alkanoate) ("PHA"). In other embodiments either the first polyester or polyester copolymer or the second polyester or polyester copolymer or both may be a poly(butylene adipate terephthalate) ("PBAT").

The first polyester or polyester copolymer and the second polyester or polyester copolymer may be present in the polymer processing aid in a ratio of from about 1:10 to about 10:1. Preferably the first polyester or polyester copolymer and the second polyester or polyester copolymer are present at a ratio of from about 1:5 to about 5:1, more preferably at a ratio of from about 1:3 to about 3:1.

The polymer processing aid may be dispersed in the polyolefin composition at an average dispersed particle size of 0.2 to 30 microns, more preferably 0.5 to 20 microns, still more preferably 1 to 15 microns, and most preferably 1 to 10 microns.

Either or both the first and second polyester or polyester copolymers may be poly(lactic acid) with a non-linear architecture. The poly(lactic acid) may have been branched through the addition of a chain extender or through free radical mediated chemistry.

The polyolefin may be selected from a polyethylene, including a high-density polyethylene, linear low-density polyethylene or a low-density polyethylene, or a polypropylene, including a homopolymer polypropylene, random copolymer polypropylene, or a heterophasic impact copolymer polypropylene, or a combination thereof.

In some embodiments the first or second polyester or polyester copolymer or both may be selected from the group comprising poly(lactic acid), polyhydroxyalkanoates, polyhydroxyalkanoate copolymers, poly(butylene adipate terephthalate). Preferably the polyester or polyester copolymer is poly(lactic acid), a polyhydroxyalkanoate or polyhydroxyalkanoate copolymers. The polyester or polyester copolymer may be a polyhydroxyalkanoate, polyhydroxyalkanoate copolymer or a poly(butylene adipate terephthalate).

Polyesters and polyester copolymers suitable for use in the present invention include aliphatic polyesters, aromatic polyesters, and copolymers of aliphatic or aromatic polyesters.

Aliphatic polyesters and aliphatic polyester copolymers suitable for use in the present invention include poly(lactic acid), poly(glycolic acid), poly(caprolactone), poly(butylene succinate), poly(butylene co-adipate), and the various poly(hydroxyalkanoates) including poly(4-hydroxybutyrate), poly(3-hdyroxyvalerate), poly(3-hydroxybutyrate), poly(3-hydroxybutyrate-co-4-hydroxybutyrate), poly(3-hydroxybutyrate-co-3-hydroxyvalerate).

Aromatic polyesters and aromatic polyester copolymers suitable for use in the present invention include poly(butylene adipate terephthalate), poly(butylene succinate-co-terephthalate) and poly(butylene terephthalate co-oxyalkylene).

A preferred polyester suitable for use in the current invention is poly(lactic acid). Preferred PLAs of the present invention have a Melt Flow Rate (ASTM D1238, 210°C, 2.16 kg) in the range of 0.1 to 150 g/10 min. Preferred PLAs useful as the first polyester of the present invention have a MFR in the range of 0.5 to 100, for example 0.5 to 80, for example 1 to 50. Preferred PLAs useful as the first polyester of the present invention have a MFR in the range of 0.5 to 15.

The second polyester suitable for use in the present invention can be of the same polymer type or a different polymer type as the first polyester. In the case where the second polyester is of the same type as the first polyester, the second polyester should have a higher MFR than the first polyester. The second polyester should have a MFR that is at least 5% higher, suitably 10% higher, preferably at least 20% higher, and most preferably at least 50% higher when measured under the same standard ASTM D1238 test conditions as the first polyester. In the case where the second polyester is of a different type than the first polyester the MFR of the second polyester is not limited by the MFR. However, it is preferable for the second polyester to have a higher MFR than the first polyester. The second polyester should have a MFR that is at least 5% higher, suitably 10% higher, preferably at least 20% higher, and most preferably at least 50% higher when measured under the same standard ASTM D1238 test conditions as the first polyester.

A preferred second polyester suitable for use in the current invention is poly (lactic acid). Preferred PLAs suitable for use in the present invention have a Melt Flow Rate (MFR; ASTM D1238, 210°C, 2.16 kg) in the range of 0.1 to 150 g/10 min. In the case where the first polyester is a PLA, and the second polyester is also a PLA, the second PLA should preferably have a MFR that is higher than that of the first PLA. The second PLA should preferably have an MFR that is at least 5% higher, suitably 10% higher, preferably at least 20% higher, and most preferably at least 50% higher when measured under the same standard ASTM D1238 test conditions as the first polyester. As an example where the first PLA has a MFR (210C, 2.16 kg) of 8 g/10 min, the second PLA should have a MFR that is at least 8.4 g/10 min (5% higher), suitably greater than 8.8 g/10 min (10% higher), preferably greater than 9.6 g/10min (20% higher) and most preferably greater than 12 g/10 min (50% higher).

The composition may further comprise 0.01 to 50 weight-% of the total composition of a synergist which is a poly(oxyalkylene) or a polymeric liquid phosphite antioxidant of between 1,000 and 20,000 g/mol molecular weight. The poly(oxyalkylene) may be a polyethylene glycol. The poly(oxyalkylene) may have a molecular weight of 2,000 to 10,000 g/mol. In some embodiments, the synergist is present at a concentration of 0.01 to 0.5 % based on the total weight of the polyolefin composition, preferably from 0.01 to 0.2 %, such embodiments being suitable as extrudable compositions for use in polyolefin extrusion processes. In other embodiments, the synergist is present at a concentration of 1 to 50 %, preferably from 5 to 25 %, such embodiments being suitable for use as masterbatches. The ratio of synergist to the polyester PPAs in compositions of the present invention is suitably between 1:9 and 9:1.

The composition may further comprise from 0.01 to 10% of the total composition of boron nitride. The boron nitride preferably has a mean particle size of less than 30 microns and more preferably less than 10 microns. In some applications of the present invention, boron nitride is used at a concentration as low as 0.01 to 0.2%, preferably from 0.01 to 0.1% %, such embodiments being suitable as extrudable compositions for use in polyolefin extrusion processes. In other embodiments, boron nitride is present at a concentration of 0.5 to 50%, preferably from 0.5 to 10 %, such embodiments being suitable for use as masterbatches.

A composition comprising a linear polyolefin may further comprise from 0.1 to 50% of the total composition of low-density polyethylene (LDPE). The LDPE may be present in an amount of 0.1 to 15 %, suitably from 0.1 to 5%, preferably 0.1 to 0.5 % in an extrudable composition. The LDPE may be present in an amount of 5 to 99 %, suitably 5 to 40%, preferably 10 to 35% in a masterbatch where the remainder of the carrier resin is a linear polyolefin; or the LDPE can be used as the exclusive carrier resin for the PPA masterbatch.

The invention also provides an extruded polyolefin product whenever produced using the composition or the methods described above.

The composition of the present invention, which is preferably fluorine free and siloxane free, is useful in removing, reducing the occurrence or delaying the onset of melt fracture to higher throughputs in polyolefin conversion processes including extrusion and in particular blown and cast film extrusion, profile extrusion, extrusion blow molding and fibre spinning. The compositions are also useful in reducing extrusion pressure in various extrusion processes including blown and cast film extrusion, profile extrusion, extrusion blow molding and fibre spinning. The compositions are also useful in

reducing die lip buildup in various extrusion processes.

## Detailed Description of the Invention

The invention relates to polyolefin compositions showing improved extrusion properties. The invention also relates to the methods of manufacture of the polyolefin compositions and articles made from the polyolefin compositions.

In another aspect, it relates to Polymer Processing Aids (PPAs) comprised of polyesters or polyester copolymers used to improve the extrusion properties of polyolefin compositions. In another aspect, it relates to Polymer Processing Aids (PPAs) comprised of a blend of a (first) polyester or polyester copolymer with a second polyester or polyester copolymer used to improve the extrusion properties of polyolefin compositions. In another aspect, it relates to the use of PPAs comprised of synergists and polyesters or polyester copolymers to improve the extrusion properties of polyolefin compositions. In another aspect, it relates to the use of PPAs comprised of boron nitride and polyester or polyester copolymers to improve the extrusion properties of polyolefin compositions. In a further aspect of the invention, it relates to a masterbatch useful for delivering accurate dosing of the PPA to a polyolefin composition.

The particulars of the invention shown herein are by way of example. They are meant to illustrate various embodiments of the invention and are not meant to limit the scope of the invention.

Given below are the condensed (by no means exhaustive) customary definitions known in the art, of which certain terms which may aid in the description of the invention.

'Masterbatch' is a concentrated mixture of pigments and/or additives which are encapsulated or dissolved during a heating and mixing process into a carrier polymer which is then cooled and cut into a granular shape. A masterbatch can be added to a base polymer in order to deliver the desired concentration of pigments or additives to the base polymer.

'Base Polymer' is the polymer which is to be colored, functionalized, stabilized or otherwise modified by additives or masterbatch. This may also be referred to as the 'letdown resin' by those familiar with the art.

'Carrier Polymer' is the polymer or polymer blend that, when combined with fillers, colorants or additives, will encapsulate them to form a masterbatch.

'Copolymer', is defined in the 'Compendium of Polymer Terminology and Nomenclature, IUPAC Recommendations, 2008' by RSC Publishing (hereafter referred to as the IUPAC Compendium) as a polymer derived from more than one species of monomer.

'Die-Lip Buildup', (DLBU) is the accumulation of extrudate material on the exits of an extrusion die (the 'die lips').

'Melt Flow Rate' (MFR) is as defined in ASTM D1238-20. Units of measure are in grams per 10 minutes.

'Polar Functional Group' means a functional group containing two atoms with an electronegativity difference on the Pauling scale of 0.4 to 1.7.

'Substantially Free' with regards to the content of a polymer or polymer additive means below the levels that would intentionally be included in a polymer composition. Substantially free may still allow for levels of unintentionally added substances. Substantially free permits trace amounts of less than 10 ppm and preferably less than 1ppm.

'Terminal group' is the chemical species at the end of a polymer chain or chain branch.

All percentages described in this document shall refer to the percentage on a weight basis of the total composition.

One embodiment of the invention is an extrudable composition of:

a. a polyolefin, and
b. from 0.01 to 1.0 weight-% (of the total composition) of a polymer processing aid, wherein the polymer processing aid comprises a first polyester or polyester copolymer.

Another embodiment of the invention is a masterbatch composition of:

a. a polyolefin, and
b. from 5 to 45 weight-% (of the total composition) of a polymer processing aid, wherein the polymer processing aid comprises a first polyester or polyester copolymer.

The composition may further comprise a second polyester or polyester copolymer as part of the polymer processing aid (PPA).

The composition may further comprise an optional synergist selected from the list of poly(oxy alkylenes) and polymeric liquid phosphites.

The composition may further comprise from 0.01 to 10% of the total composition of boron nitride. The boron nitride may be present in an amount of 0.01 to 0.2% in an extrudable composition. The boron nitride may be present in an amount of 0.5 to 10% in a masterbatch. The boron nitride preferably has a mean particle size of less than 30 microns and more preferably less than 10 microns.

The composition may further comprise from 0.2 to 25% of the total composition of low density polyethylene. The LDPE may be present in an amount of 0.2 to 15% in an extrudable composition. The boron nitride may be present in an amount of 5 to 25% in a masterbatch.

The masterbatch composition may further comprise from 5 to 75% of polymer additives selected from hindered phenol antioxidants, phosphite antioxidants, catalyst neutralizers including metal carboxylates, hydrotalcites and zinc oxide, anti-blocking agents, slip agents, anti-static agents, and pigments, such masterbatch compositions being useful to deliver combinations of the polymer processing aid and other polymer additives to a polyolefin extrudable composition.

**The Polyolefin.**

Polyolefins suitable for use in the composition include linear or branched polyolefins. In particular, polyolefins useful in the present invention include polypropylene, high-density polyethylene, linear low-density polyethylene, medium density polyethylene, polybutene, copolymers thereof, and including ethylene vinyl acetate copolymers, acid copolymers including ethylene-methacrylic acid and ethylene-acrylic acid copolymers, and combinations thereof. Such polyolefins may be produced by any means known in the art including free radical high-pressure processes and via catalyzed processes including by chrome catalyst, Ziegler-Natta catalyst and single site catalysts including metallocene catalysts.

In some embodiments, the polyolefin may comprise a substantially linear polyolefin or alpha-olefin copolymer. Suitably, the polyolefin may comprise a substantially linear polyethylene or polyethylene copolymer with a density of between 0.91 and 0.965 g/cm$^3$.

In some embodiments, the polyolefin comprises a linear low-density polyethylene (LLDPE) with a density of between about 0.91 and 0.925 g/cm$^3$. This may be selected from the group comprising: butene, hexene, octene, or other low (short-chain) alpha-olefin copolymers of polyethylene. Examples of such LLDPEs include LyondellBasell Petrothene GA502024 and ExxonMobil Chemical Company LL 1001X31. Narrow molecular weight distribution (Mw/Mn < 3, for example less than 2), low melt flow rate (MFR < 2 g/10 min) linear low-density polyethylene copolymers are known to be prone to sharkskin and can benefit from the use of polymer processing aid compositions of the present invention. In particular, narrow molecular weight distribution, low melt flow rate (MFR < 2g/10 min) metallocene linear low-density polyethylene copolymers are known to be especially prone to sharkskin and can benefit from the use of PPA compositions of the present invention.

In some embodiments, the polyolefin comprises a medium-density polyethylene (MDPE) with a density of between about 0.925 and 0.940 g/cm$^3$. This may be selected from the group comprising: butene, hexene, or other low alpha-olefin copolymers of polyethylene.

In some embodiments, the polyolefin comprises a high-density polyethylene (HDPE) with a density of equal to or greater than about 0.940 g/cm$^3$. This may be selected from the group comprising: butene, hexene, or other low alpha-olefin copolymers of polyethylene. It may also be a homopolymer HDPE.

In some embodiments, the polyolefin may comprise a branched low-density polyethylene (LDPE) with a density of between about 0.91 and 0.94 g/cm$^3$. LDPE is not particularly prone to sharkskin melt defects, but LDPE is often blended with linear polyolefins in compositions of the present invention. LDPEs of the present invention include LyondellBasell Petrothene NA219000.

In some embodiments, the polyolefin may be a blend of polyolefins. Blends of polyolefins may be used to impart specific properties to the finished polyolefin article. In some embodiments the polyolefin may be a blend including a lower density plastomer or elastomer component. Such lower density polyolefins may be used to impart specific properties including toughness or sealing properties for film applications.

In some embodiments, the polyolefin may be a polypropylene. Such polypropylenes can include homopolymer polypropylene (hPP), random copolymer polypropylene (RCP), impact copolymer polypropylene (ICP) or blends thereof. Examples of polypropylenes of the present invention include Braskem FF030F2. While polypropylenes are not typically prone to sharkskin melt fracture, they can exhibit die-lip buildup and can benefit from the polymer processing aids of the current invention.

**The Polyester and Polyester Copolymers**

Polyesters useful in the present invention include any polymer containing the ester functional group either within or across each repeat unit of the polymer backbone. This definition should be construed in a non-limiting manner and includes aliphatic and aromatic polyesters, and copolymers thereof.

The polyesters suitable for use in the present invention include those represented by Formula 1 or Formula 2:

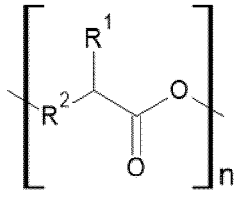

Formula 1

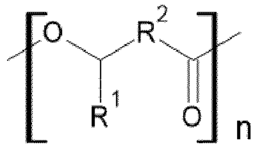

Formula 2

wherein $R^1$ is H or a branched or linear alkyl of 1 to 12 carbon atoms, preferably 1 to 8 carbon atoms, such as 1 to 6 carbon atoms, and $R^2$ is optional and can be a branched, linear or cyclic alkyl chain of 1 to 12 carbon atoms. Preferably, n is such that the molecular weight of the polymer is greater than 1000 g/mol, preferably greater than 10,000 g/mol, for example greater than 50,000 g/mol, or greater than 100,000 g/mol.

Polyesters useful in the present invention include aliphatic polyesters, aromatic polyesters, and copolymers of aliphatic or aromatic polyesters.

Aliphatic polyesters and aliphatic polyester copolymers suitable for use in the present invention include poly(lactic acid), polyglycolic acid, polycaprolactone, poly(butylene succinate), poly(butylene co-adipate), and the various poly(hydroxyalkanoates) including poly(4-hydroxybutyrate), poly(3-hdyroxyvalerate), poly(3-hydroxybutyrate), poly(3-hydroxybutyrate-co-4-hydroxybutyrate), poly(3-hydroxybutyrate-co-3-hydroxyvalerate).

PLAs suitable for use in the present invention can be represented by Formula 3:

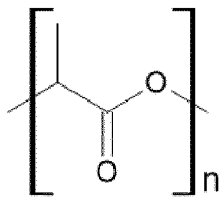

Formula 3

PLAs suitable for use in the present invention can be produced from either or both of the D-isomer or L-isomer of the lactic acid or lactide monomer. For reasons of economics, preferred PLAs of the present invention are primarily of the L-isomer. Preferred PLAs of the present invention are >80% L-isomer, more preferably >90% L-isomer and most preferably > 95% L-isomer.

Preferred PLAs suitable for use in the present invention have a Melt Flow Rate (ASTM D1238, 210°C, 2.16 kg) in the range of 0.1 to 150 g/10 min. Preferred PLAs useful as the first polyester of the present invention have a MFR in the range of 0.5 to 100, for example 0.5 to 80, for example 1 to 50, for example 0.5 to 15.

Second polyesters suitable for use in the present invention can be of the same polymer type or a different polymer type as the first polyester. In the case where the second polyester is of the same type as the first polyester, the second polyester should have a higher MFR than the first polyester. The second polyester should preferably have an MFR that is at least 5% higher, suitably 10% higher, preferably at least 20% higher, and most preferably at least 50% higher when measured under the same standard ASTM D1238 test conditions as the first polyester.

Preferred second polyesters suitable for use in the current invention are poly(lactic acid). Preferred PLAs of the present invention have a Melt Flow Rate (ASTM D1238, 210°C, 2.16 kg) in the range of 0.1 to 50 g/10 min. In the case where the first polyester is a PLA, and the second polyester is also a PLA, the second PLA should preferably have a MFR that is higher than that of the first PLA. The second PLA should preferably have an MFR that is at least 5% higher, suitably 10% higher, preferably at least 20% higher, and most preferably at least 50% higher when measured under the same standard ASTM D1238 test conditions as the first polyester. For example: a first PLA could have a MFR of 1 to 15 g/10 min, preferably 5-10 MFR where the second PLA could have a MFR of 15 to 30 g/10 min, preferably 20-25 g/10 min.

Examples of PLAs useful as either the first or second polyesters in the present invention include Ingeo Biopolymer 3001D, 3051D, 3052D, 4043D, 4044D, 6302D, 6060D (Natureworks, Plymouth, MN USA) and Luminy L175, LX175, LX530, LX930, and LX975 (TotalEnergies Corbion, Gorinchem, The Netherlands).

In some embodiments where the (first) polyester is a PLA, the PLA contains a minimum number of crosslinks or branches to provide an increase in viscosity, an increase in shear thinning or an increase of elasticity. Branching can be

accomplished through the addition of a chain extender containing reactive functional groups such a glycidyl methacrylate ("GMA") or by radical-mediated coupling for example by a peroxide. The chain extender can be incorporated into the PPA by any means known in the art. The chain extender may be extruded with the PLA in a first extrusion step in order to provide the increase in viscosity, increase in shear thinning or increase in elasticity of the PLA. The resulting branched PLA can then be incorporated in the PPA composition of the present invention in a second step. Alternately the chain extender can be incorporated in the PPA composition of the present invention in a single step. Examples of chain extenders of the current invention include Joncryl 4400 and Joncryl 4468 (BASF, Ludwigshafen Germany).

Branching can also be accomplished via radical mediated chemistry including through the use of organic peroxides or ultraviolet radiation. Branching via radical mediated chemistry can be accomplished in a first step to generate the branched PLA prior to incorporation into the masterbatch or extrudable composition.

Poly(glycolic acid) suitable for use in the present invention can be represented by Formula 4:

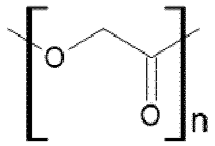

Formula 4

Preferred PGAs suitable for use in the present invention have a MFR in the range of 0.5 to 50 (2.16 kg, 250°C). More preferred PGAs suitable for use in the present invention have a MFR of 1 to 40, more preferably 5 to 30. Examples of PGAs suitable for use in the present invention include Kuredux (Kureha, Japan).

Poly(caprolactone) suitable for use in the present invention can be represented by Formula 5:

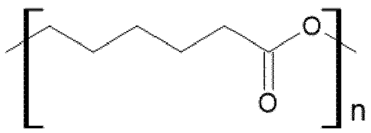

Formula 5

Preferred PCLs suitable for use in the present invention have a molecular weight greater than 1000 g/mol. More preferred PCLs suitable for use in the present invention have a molecular weight greater than 2000 g/mol.

Where the PCL is used as the first polyester in the PPA composition, it preferably has a molecular weight of greater than 3000 g/mol, more preferably greater than 10,000 g/mol, for example greater than 40,000 g/mol. Examples of PCL useful as the first polyester in the present invention includes Capa 6500, Capa 6800 (Ingevity, North Charleston, USA).

Where PCL is used as the second polyester in the PPA composition it preferably has a molecular weight of greater than 1000 g/mol, more preferably greater than 2,000 g/mol, for example, approximately 4000 g/mol. Examples of PCL useful as the second polyester in the present invention includes Capa 2201A, Capa 2203A, and Capa 2403D (Ingevity, North Charleston, USA).

Polyhydroxyalkanoates suitable for use in the present invention include the broad range of polyhydroxyalkanoate polymers and copolymers. PHAs suitable for use in the present invention can be represented by Formula 2.

PHAs suitable for use in the present invention include poly(4-hydroxybutyrate) ("P4HB") represented by Formula 6, poly(3-hydroxyvalerate) ("PHV") represented by Formula 7, poly(3-hydroxybutyrate) ("P3HB") represented by Formula 8 as well as copolymers thereof including, poly(3-hydroxybutyrate-co-4-hydroxybutyrate) represented by Formula 9 and poly(3-hydroxybutyrate-co-3-hydroxyvalerate) represented by Formula 10.

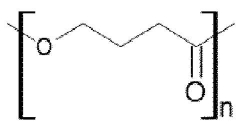

Formula 6

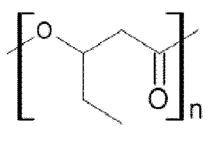

Formula 7

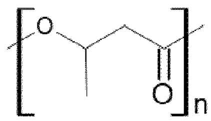

Formula 8

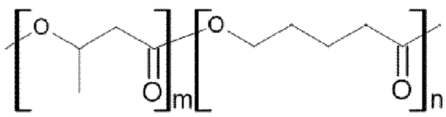

Formula 9

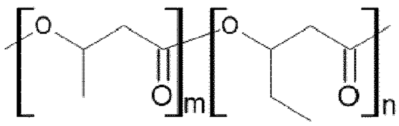

Formula 10

PHAs useful in the present invention include PHACT A1000P (CJ Biomaterials, Indonesia)

Other aliphatic polyester copolymers useful as PPA components in the present invention include the alkylene glycol-dicarboxylic acid copolymers represented by Formula 11

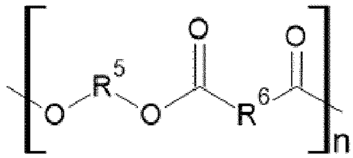

Formula 11

Where $R^5$ and $R^6$ are the same or different and are alkylenes of C2 to C8.

Examples of such alkylene glycol-dicarboxylic acid copolymers include the polyadipate copolymers including poly(ethylene adipate) represented by formula 12, poly(propylene adipate) and poly(butylene adipate).

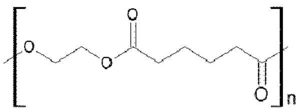

Formula 12

Other examples of alkylene glycol-dicarboxylic acid copolymers include the polysuccinate copolymers including poly(ethylene succinate), poly(propylene succinate), poly(butylene succinate) ("PBS") represented by Formula 13 and poly(butylene succinate co-adipate) ("PBSA") represented by Formula 14.

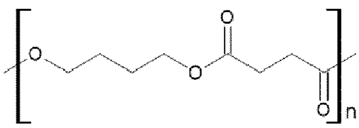

Formula 13

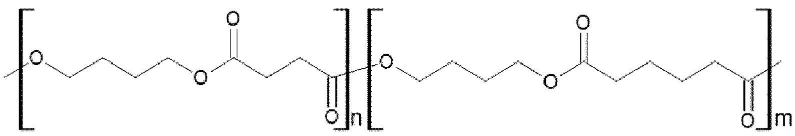

Formula 14

PBS useful as polyesters in the present invention include BioPBS FZ91 and BioPBS FZ71PM (PTT MCC Biochem, Thailand) as well as BG5000M (An Phat Holding, Vietnam). PBSA useful as polyesters in the present invention includes BioPBS FD72PM and BioPBS FD92PM (PTT MCC Biochem, Thailand).

Aromatic polyesters and aromatic polyester copolymers suitable for use in the present invention include poly(ethylene terephthalate) ("PET"), poly(butylene adipate terephthalate) ("PBAT"), poly(butylene succinate-co-terephthalate) ("PBST") and poly(butylene terephthalate co-oxyalkylene). PBAT useful as the polyester in the present invention includes BG1000, BG1070 (An Phat Holding, Vietnam). Poly(butylene terephthalate co-oxyalkylene) useful as

the polyester in the present invention include Hytrel 3078FG, Hytrel 4053FG NC010, Hytrel 4068FG, Hytrel 5553FG NC010, and Hytrel 6359FG NC010.

**The Synergist**

The composition of the present invention optionally contains a synergist. The synergist of the present invention is either or both of a poly(oxyalkylene) also known as a poly(alkylene oxide), or a polymeric liquid phosphite antioxidant.

In one embodiment of the present invention the poly(oxyalkylene) is a polyethylene glycol. In a preferred embodiment of the present invention, the polyethylene glycol has a molecular weight of 1,000 to 20,000 grams/mole. In a more preferred embodiment of the present invention the polyethylene glycol has a molecular weight of 2,000 to 10,000 grams/mole. An example of polyethylene glycol useful in the present invention is Dow Carbowax 8000.

In another embodiment of the present invention the synergist is a polymeric liquid phosphite antioxidant. US Patent No. 8,563,637 and US 8,981,042 disclose polymeric liquid polyphosphites useful in the present invention. Examples of polymeric liquid phosphites useful in the present invention are Dover Chemical Corp (Dover, OH) Doverphos LGP-11 and Doverphos LGP-12.

**Boron Nitride**

In another embodiment of the present invention the composition contains boron nitride. The boron nitride is present in the composition in an amount from 0.01 to 10 wt.-%. The boron nitride preferably has a mean particle size less than 30 microns. The boron nitride more preferably has a mean particle size of less than 10 microns. An example of boron nitride useful in the present invention is Saint-Gobain CarboTherm PCTF5. The boron nitride may be used in conjunction with the synergists described above.

**Other Polymer Additives**

The compositions of the present invention may also contain additional polymer additives as are known in the art. Additional polymer additives which can be added to the composition of the present invention, include, but are not limited to hindered phenol and phosphite antioxidants, catalyst/acid neutralizers include the hydrotalcites, zinc oxide, and the metal carboxylates including calcium, zinc, potassium, magnesium, lithium and sodium stearates. Other polymer additives that can be included in the composition of the present invention include slip additives, anti-blocking additives, and antistatic agents.

Hindered phenols are known as antioxidants for polyolefins. Hindered phenols particularly useful in the present invention include, but are not limited to: octadecyl-(3-(3,5-di-t-butyl-4-hydroxyphenol)propionate) ("AO 1076"; CAS Number 2082-79-3), pentaerythritol tetrakis (3-(3,5-di-t-butyl-4-hydroxyphenol)propionate) ("AO 1010"; CAS Number 6683-19-8),

1,3,5-tris(4-tert-butyl-3-hydroxy-2,6-dimethylbenzyl)-1,3,5-triazine-2,4,6-(1H,3H,5H)-trione ("AO 1790"; CAS Number 40601-76-1),
1,3,5-tris(3,5-di-tert-butyl-4-hydroxybenzyl)-1,3,5-triazine-2,4,6(1h,3h,5h)-trione ("AO 3114"; CAS Number 27676-62-6), and
1,3,5-trimethyl-2,4,6-tis(3,5-di-tert-butyl-4-hydroxybenzyl)benzene ("AO 1330", CAS Number 1709-70-2).

Phosphites and phosphonites are also known as antioxidants for plastics. They are predominantly aromatic phosphites and phosphonites. Phosphites and phosphonites useful in the present invention include, but are not limited to:

tris-(2,4-di-t-butylphenyl)phosphite ("AO 168", CAS Number 31570-04-4),
bis (2,4-di-t-butylphenyl) pentaerythritol diphosphate, ("AO 626", CAS Number 26741-53-7), Tetrakis(2,4-di-tert-butylphenyl)[1,1-biphenyl]-4,4'-diylbisphosphonite ("AO PEPQ", CAS Number 38613-77-3), and
bis (2,4-di-t-cumylphenyl) pentaerythritol diphosphate ("AO 9228", CAS 154862-43-8).

Metal carboxylates useful in the present invention include the metal stearates, including calcium stearate, zinc stearate, magnesium stearate, and lithium stearate.

Slip additives useful in the present invention include erucamide (CAS Number 112-84-5) and oleamide 28CAS Number 301-02-0).

Anti-blocking additives useful in the present invention include synthetic silica (CAS Number 112926-00-8), diatomaceous earth (CAS Number 68855-54-9), nepheline syenite (CAS Number 37244-96-5), talc (CAS Number 14807-96-6), sodium calcium aluminosilicate hydrate (CAS Number 1344-01-0), and calcined Kaolin (CAS Number

92704-41-1).

Antistatic Additives useful in the present invention include glycerol monostearate (CAS Number 31566-31-1).

**Theory**

Blends of polyesters with polyolefins are well known in the art. Various polyesters have been blended with polyolefins to achieve specific performance attributes such as targeted physical properties (tensile strength, or flexural modulus), permeation properties, degradability in the case of biodegradable polyesters etc. In order to achieve targeted properties, the incorporation rates of the polyesters are on the order of at least several percent and typically higher. In order to improve the physical properties of the polyester-polyolefin blends a compatibilizer is often used. Compatibilizers improve the interfacial adhesion between the polyester and polyolefin phase. It has surprisingly been found that low levels of 0.01 to 1.0% of polyesters and polyester blends can act as polymer processing aids for polyolefins. In addition, these polyesters should be incorporated without a compatibilizer such that the work of adhesion between the polyolefin and the polyester based PPA of the present invention is low.

Without wishing to be constrained by theory, it is believed that the polyester or polyester copolymer polymer processing aids in the present invention function similarly to the fluoropolymer PPAs of the prior art. The polymer processing aids must coat the extrusion die wall, in particular the die exit, and they must induce a slip velocity between the PPA coating and the polyolefin being processed. The polyester based PPAs of the present invention are believed to efficiently achieve this.

It is believed that several specific polyesters can function as PPAs. By selecting specific polyesters with specific ranges of physical and chemical properties more preferred selections of polyesters useful as PPAs can be made. Adapting the teachings of fluoropolymer processing aids, the polyester based PPA should be immiscible with the polyolefin, should be able to bond to the metal or metal oxide of the extrusion die, should readily spread and form a coating layer on the metal extrusion die to form a slip layer, have a low work of adhesion with the polyolefin in order to promote slip, and should possess sufficient thermal and chemical stability.

In order to find application in large volume food packaging applications, the PPAs should preferably also be non-migratory, suitable for food contact, and not have a large negative effect on haze or clarity of films. It is also beneficial if the PPAs have a low carbon footprint or are derived from renewable resources.

The PPAs suitable for use in the invention are based on polyesters. The ester functional groups are believed to promote bonding to the metal oxide surface of an extrusion die.

The coating efficiency of the polyester based PPAs suitable for use in the present invention is believed to be a function of the molecular weight, molecular weight distribution and structure of the polyester, which affect its viscosity, shear thinning properties and elasticity. It is believed that the viscosity of the first polyester should be similar to that of the polyolefin at the temperature and shear rate range at which it is being processed. The polyester should preferably be dispersed in the polyolefin in an average dispersed particle size of 0.2 to 30 microns, more preferably 0.5 to 20 microns, still more preferably 1 to 15 microns, and most preferably 1 to 10 microns at the extrusion die in order to promote efficient coating of the die wall. This particle size is achieved through a combination of the selection of a polyester of suitable viscosity, elasticity as well as through the use of either or both of a second polyester or a synergist, and processing conditions.

The choice of a specific polyester or polyesters may depend on a number of factors. Polyesters with a larger number of ester groups per unit weight are expected to have a larger attraction to the metal or metal oxide of an extrusion die. However, the flexibility of the chain, the structure, molecular weight and molecular weight distribution of the polyester will all affect the coating kinetics of the polyester on the die. The first polyester will have a characteristic interfacial tension and work of adhesion with the polyolefin of the composition of the present invention. The first polyester will preferably have a low work of adhesion with the polyolefin in order to facilitate slip of the polyolefin on the polyester based PPA which is coating the die wall.

The first polyester should have sufficient molecular weight so that it has good thermal stability and is non-migratory in the finished polyolefin article.

The use of a second polyester is believed, depending on the specific combination of the first and second polyester, to improve the performance of the PPA. The second polyester may act as an interfacial agent, reducing the shear on the dispersed phase of the first polyester in the polyolefin composition, and thereby helping maintain an optimum particle size during processing, or it may help facilitate coating of the die. In order to provide this function, the second polyester should have a viscosity under the processing conditions which is less than that of the first polyester. The second polyester should also be chosen with regards to the interfacial energies of the materials involved - i.e. the second polyester should preferably be chosen such that it has a tendency to wet (partially or fully encapsulate) the first polyester when dispersed in the polyolefin. The ability of a second polyester to wet a first polyester when mixed in the polyolefin can be estimated using spreading coefficients calculated from surface energy of the materials (Kokahchi, Ahmad R; Ajji, Abdellah; Carreau, Pierre J; Surface Morphology and Properties of Ternay Polymer Blends: Effect of the Migration of

Minor Components. J. Phys. Chem. B 2014, 118, 6316-6323) or determined experimentally as is known in the art. Wetting of the first polyester by the second polyester may be further aided where the second polyester has a lower viscosity (higher MFR when measured under identical conditions) than the first polyester.

Additionally, or alternatively to the second polyester, the synergist can help reduce the amount of shear on the first polyester and thus maintain sufficient average particle size. In order to provide this function, the synergist should have a viscosity under the processing conditions which is less than that of the first polyester. The polyethylene glycol useful in the present invention is believed to perform this function. While the polymeric liquid phosphites of the present invention are also believed to perform this function, they are believed to offer an additional benefit in that they mitigate oxidative degradation of the polymer. Reduced oxidation of the polyolefin is expected to reduce the frequency of crosslinked gels as well as reduce oxidized polymer on the metal surfaces of processing equipment.

Again, without wishing to be constrained by theory, the boron nitride of the present invention is believed to work via a different mechanism than the synergists. In addition to showing some improvement in the delay of sharkskin, boron nitride may also decrease the severity of gross melt fracture.

**Extrudable Compositions and Masterbatches**

Extrudable compositions of the present invention are useful in polyolefin extrusion processes including blown film, cast film, sheet extrusion, extrusion blow molding, fibre spinning, and profile extrusion in reducing or eliminating melt fracture including sharkskin as described in the foregoing. As little as 0.01 to 1.0% by weight of the total composition, based on the total weight of the polyolefin composition, of the PPA is required in the extrudable polyolefin composition in order to reduce or delay melt fracture. Suitably extrudable compositions contain from 0.05 to 0.7% of the PPA in the polyolefin, for example from 0.1 to 0.5%, from 0.2 to 0.4%.

In some applications of the present invention the PPA composition includes a second polyester in addition to the first polyester. The second polyester is used at ratio of 1:10 to 10:1 with the first polyester, preferably at a ratio of 1:5 to 5:1, more preferably at a ratio of 1:3 to 3:1. Where the PPA includes the second polyester the combination of the first and second polyester is used at a concentration as low as 0.01 to 1.0 weight % of the extrudable polyolefin composition in order to reduce or delay melt fracture. Suitably extrudable compositions contain from 0.05 to 0.7% of the PPA, for example from 0.1 to 0.5%, or from 0.2 to 0.4 %.

In some applications of the present invention the PPA includes a synergist. The synergist is used at ratio of 1:10 to 10:1 with the first polyester, preferably at a ratio of 1:5 to 5:1, more preferably at a ratio of 1:3 to 3:1. Where the PPA includes the synergist, the combination of the first polyester, the second polyester if present, and the synergist is used at a concentration as low as 0.01 to 1.0 weight % of the extrudable polyolefin composition in order to reduce or delay melt fracture. Preferred extrudable compositions contain from 0.05 to 0.7% of the PPA, for example from 0.1 to 0.5%, from 0.2 to 0.4%. Extrudable compositions of the present invention can be prepared by polyolefin producers in their post extrusion pelletizing operations. Pelletizing is typically achieved by extrusion through a die via a twin-screw extruder, melt pump or similar equipment as is known in the art. Numerous techniques can be employed to introduce the PPA components, as well as other polymer additives as is known in the art to the post reactor polyolefin stream. The PPA can be dosed directly to the polyolefin stream where it is mixed into the polymer prior to pelletization. The storage, handling and dosing systems for the PPA is well known in the art. However, in some post-reactor pelletizing operations the required feeding systems may not be available, or it may be otherwise desirable to handle and feed the PPA, and optional additional additives via a masterbatch. This can be achieved by the preparation of a masterbatch of a higher concentration of the PPA and optional additional additives in a polyolefin carrier polymer.

The use of masterbatches is well known in the art. Producing a masterbatch of a higher concentration of the PPA components to be let down into the base polymer to achieve the final extrudable composition can improve the accuracy in formulating the extrudable composition. The use of a masterbatch can also allow the dosing of the PPA in combination with other polymer additives via a single masterbatch.

Compositions of the present invention useful as masterbatches for polyolefins contain from 1 to 45 weight % of the PPA in a polyolefin carrier polymer. In some embodiments the masterbatch is comprised of 2 to 40% of the PPA in a polyolefin carrier polymer. Preferred compositions useful as masterbatches contain from 3 to 30% PPA, for example 5% to 25%, for example 10 to 20%.

Some compositions of the present invention useful as masterbatches contain boron nitride in conjunction with the PPA in a polyolefin carrier polymer. In one embodiment, the masterbatch contains from 0.5 to 25 weight % boron nitride. In another embodiment of the present invention, the composition contains from 1 to 10% of boron nitride.

The polyolefin carrier polymer used in the masterbatch compositions of the present invention is compatible with the base polymer in which the masterbatch will be let down. Preferably the polyolefin carrier polymer used in the masterbatch composition is miscible with the base polymer. By way of example a polyethylene carrier is a preferred carrier polymer for a masterbatch of the present invention used to modify a polyethylene base polymer. If the base polymer is an LLDPE, then the polyethylene carrier polymer of the masterbatch is preferably a polyethylene, and more preferably an

LLDPE.

The use of a masterbatch composition of the present invention allows polyolefin producers to accurately prepare extrudable compositions of the present invention and thereby sell a fully formulated polyolefin with good processing characteristics to downstream converters. The polyolefin producer may include other polymer additives in their fully formulated polyolefin. Additional polymer additives which may be included by a polyolefin producer include hindered phenol and phosphite antioxidants, catalyst/acid neutralizers including hydrotalcite, zinc oxide, and the metal carboxylates including calcium, zinc, potassium, magnesium, lithium and sodium stearates. Other polymer additives that can be included are slip additives, anti-blocking additives, and antistatic agents. These polymer additives can optionally be included in a PPA masterbatch composition of the present invention. Inclusion of these additives in addition to the PPA of the present invention in the masterbatch may simplify or improve the handling and feeding of multiple additives to the polyolefin.

In some cases, the downstream converter such as a film producer may not want to purchase a fully formulated polyolefin. The use of a PPA masterbatch allows converters to customize the composition of a base polymer to meet the particular needs of their converting process. The masterbatch allows the converter to adjust the active level of PPA in an extrudable composition of the present invention to meet the particular requirements of individual processing equipment and products. The use of a masterbatch also allows the converter to 'shock' their system for a short period of time with higher levels of PPA to reduce the conditioning time required to remove sharkskin melt fracture.

Thus the use of a masterbatch of higher concentrations of the PPA and optional additional additives in the polyolefin compositions of the present invention are useful to both the polyolefin producer and the downstream converter.

The compositions of the present invention are differentiated from the prior art in that they are substantially fluorine free, reducing the appearance of, or delaying the onset of sharkskin. The compositions of the present invention may also offer additional benefits in polyolefin extrusion including reduced extrusion pressures, increased output and reduced die lip buildup. PLA and/or PHA-based compositions of the present invention offer the additional benefit of being derived from renewable resources.

## Examples

The following examples are presented for illustrative purposes only and are not intended to limit the scope of the invention.

Table 1: List of Materials

| Identifier | Manufacturer and Grade | Description |
|---|---|---|
| LLDPE1 | Exxon Mobil LL 1001X31 | Butene copolymer LLDPE, 1 MFR (190 °C, 2.16 KG), 0.918 g/cc density |
| LLDPE2 | LyondellBasell Petrothene GA502024 | Butene copolymer LLDPE, 2 MFR (190 °C, 2.16 KG), 0.918 g/cc density |
| FKM1 | 3M Dynamar FX5920A | Fluoroelastomer and PEG PPA containing a small amount of inorganic partitioning agent. |
| S1 | Dow Carbowax Sentry PEG 8000 NF Granular | Poly(ethylene)glycol<br>8,000 g/mol |
| S2 | Dover Chemical Doverphos LGP-12 | Liquid polymeric phosphite stabilizer |
| AO | BASF Irganox B 900 | Antioxidant blend of<br>80% Irgafos 168<br>20% Irganox 1076 |
| PLA1 | Total Energies Corbion LX 175 | MFR = 6 g/10 min (210 C, 2.16 kg) |
| PLA2 | Total Energies Corbion LX530 | MFR = 23 g/10 min (210 C, 2.16 kg) |
| PHA1 | CJ Biomaterials PHACT A1000P | MFR = 5 g/10 min (165C, 5kg) |
| PBAT1 | BASF Ecoflex F Blend C1200 | MFR = 2.7 -4.9 g/10 min (190C, 2.16kg)<br>Tm = 110 - 120 C. |

The list of materials used in the control, comparative examples and examples of the current invention are listed in Table 1.

In order to improve the accuracy of dosing of the PPAs, masterbatches were prepared according to the formulations found in Table 2. LyondellBasell Petrothene GA502024 received in pellet form was ground to a 12 Mesh top size and was used as the carrier polymer for all of the masterbatches. 6 kg of each recipe was weighed out batchwise to two decimal accuracy on a digital scale. For additives present at quantities less than 0.5 kg, mass was measured in grams to two decimal place accuracy on a digital scale. The weighed batches were tumble blended for 2 minutes if all additives were solid and high speed mixed for 5 minutes if a liquid component was present in the recipe.

The formulations of Table 2 were fed by a loss in weight feeder to a Coperion ZSK30 corotating twin screw extruder; equipped with a 30 mm diameter, 36 length/diameter (L/D) set of screws. A low-shear screw design was used consisting of 8 kneading block sections including 1 reverse flight element. The ZSK30 extruder is equipped with 6 barrel sections. From the feed section to the final barrel section before the die, the barrel zones were set to temperatures of 110-140-160-170-180-180 °C. The extruder was fitted with an Econ EWA 50 pelletizer set up for underwater pelletization. The diverter valve temperature was set to 170C and the die temperature was set to 170 °C. All masterbatches were extruded at 350 RPM at a rate of 18.3 kg/hr.

Table 2: Masterbatch Recipes

| Masterbatch Identifier | Masterbatch Composition | | |
|---|---|---|---|
| | PPA | AO (B900) | LLDPE2 (Carrier Polymer) |
| CMB | 3% FKM1 (5920A) | 0.1% | 96.9% |
| MB1 | 10% PLA1 (LX175) | 0.1% | 89.9% |
| MB2 | 5% PLA1 (LX175)<br>5% PLA2 (LX530) | 0.1% | 89.9% |
| MB3 | 7.5% PLA1 (LX175)<br>2.5% PLA2 (LX530) | 0.1% | 89.9% |
| MB4 | 10% PHA1 (A1000P) | 0.1% | 89.9% |
| MB5 | 10% PBAT1 (C1200) | 0.1% | 89.9% |

The time to eliminate surface melt fracture ("time-to-clear") in blown film extrusion was evaluated on a Lung Meng AH-42 blown film line equipped with a 42 mm single screw extruder (L/D = 24:1), a 68.58 mm diameter die with a die gap of 0.508 mm, and external bubble cooling. Exxon Mobil LL 1001X31 (LLDPE1) was used as the control polymer and as the base polymer for all comparative examples and examples of the present invention. LLDPE1 at 100% concentration was extruded under the temperature profile 150-180-185-185 °C with die temperature of 185 °C, a screw speed of 32 RPM at a rate of 9 kg per hour corresponding to an apparent shear rate of 350 $s^{-1}$. Shear rate was calculated according to the following formula:

$$\gamma_{w,a} = 6Q / (\pi D\, b^2)$$

where $\gamma_{w,a}$ is the apparent wall shear rate, Q is the volumetric flow rate, D is the average of the inside and outside diameter of the die and b is the die gap. The melt density of LLDPE1 was taken as 770 kg/$m^3$.

Under these conditions LLDPE1 was found to exhibit 100% sharkskin.

The PPA masterbatches of Table 2 were dry mixed with LLDPE1 pellets according to the recipes in Table 3 to make extrudable compositions. The hopper of the film line extruder was allowed to run empty, and then immediately charged with the formulation to be evaluated in Table 3 and a timer was simultaneously started. At 10-minute intervals a film sample was collected for 1 minute and the production rate was recorded in lbs. per hour. The film was laid flat on a light table in order to facilitate visual observation of the areas of the film containing melt fracture. In many cases the melt fracture cleared initially in bands. The widths of the film exhibiting melt fracture were marked and measured. The sum of the widths of areas containing film defects divided by the total width of the film provides the percent melt fracture. In some cases, the melt fracture exhibited decreasing intensity prior to being eliminated. Such areas of decreased intensity of melt fracture were still considered and measured as melt fracture.

After each evaluation of one of the compositions of Table 3, 15 kg of a 50% DE masterbatch (Ingenia Polymers IP1052) was run through the film line to scour the PPA from the metal surfaces of the die and extruder. Following this purge, LLDPE1 was run through the film line for 1 hour to remove any remaining diatomaceous earth (DE) and reestablish 100% melt fracture before proceeding to the next evaluation.

The results of the control (C), comparative examples (CE1) and examples of the present invention (E1-E9) can be

found in Table 3. The time-to-clear results are also graphed in Figure 1.

Table 3 Comparative and Example Formulations for Time-to-clear studies

| Example | Masterbatch & LDR | PPA in extrudable composition (ppm) | Melt Fracture after 1 hr. (%) | Change in output after 1 hr. (%) |
|---|---|---|---|---|
| Control | - | None. LLDPE1 only. | 100% | 0% |
| CE1 | 2% CMB | 600 ppm Dynamar 5920A | 0% | +26% |
| E1 | 2% MB1 | 2000 ppm PLA1 | 22.2% | +8% |
| E2 | 4% MB1 | 4000 ppm PLA1 | 0% | +6% |
| E3 | 0.5% MB2 | 250 ppm PLA1<br>250 ppm PLA2 | 50.9% | +6% |
| E4 | 1% MB2 | 500 ppm PLA1<br>500 ppm PLA2 | 20.9% | +8% |
| E5 | 2% MB2 | 1000 ppm PLA1<br>1000 ppm PLA2 | 3.9% | +8% |
| E6 | 4% MB2 | 2000 ppm PLA1<br>2000 ppm PLA2 | 0% | +8% |
| E7 | 4% MB3 | 3000 ppm PLA1<br>1000 ppm PLA2 | 0% | +8% |
| E8 | 2% MB4 | 2000 ppm PHA1 | 0% | +13% |
| E9 | 2% MB5 | 2000 ppm F PBAT1 | 0% | +18% |

**Discussion of Experimental Results**

Referring to Table 3 and Figure 1 it can be observed that comparative example CE1 demonstrates the good performance of a traditional polymer processing aid consisting of fluoropolymer and polyethylene glycol for the removal of sharkskin in LLDPE. CE1 shows that a composition of 600 ppm of the FKM1 in LLDPE1, prepared via the masterbatch route (masterbatch CMB), can remove 100% of the melt fracture under the test conditions within one hour. In addition, the output is increased under the same extruder conditions by 26% respectively, as compared to the output of the Control.

PLA1 is a PLA polymer comprised primarily of the L-enantiomer, has a MFR of 6 (210C, 2.16 kg). Example E1 shows that an extrudable composition of 2000 ppm PLA1 in LLDPE1 reduces sharkskin melt fracture to 22% of its lay flat width within one hour. Figure 1 shows that composition E1 (2000 ppm PLA1) does not clear melt fracture as quickly as CE1(600 ppm FKM1). The extrudable composition E1 also showed an increase in output of 8% at the same extruder RPM versus the Control. CE1 (FKM1) showed a larger increase in output of 26%.

Example E2 shows that increasing the percentage of PLA1 in LLDPE1 to 4000 ppm provides an extrudable composition that completely clears melt fracture in 50 minutes. Looking at Figure 1 it is seen that composition E2 shows superior performance to CE1. Although the extrudable composition E2 used a higher active loading of the PPA than that used in CE1, the PLA based PPA is effective, has favourable economics, is substantially fluorine and siloxane free, increases extruder output and the PLA is produced from renewable resources.

Extrudable composition of E3, E4, E5, and E6 are based on a PPA comprised of equivalent parts of PLA1 and PLA2. PLA2 is PLA polymer comprised primarily of the L-enantiomer, has a MFR of 23 (210C, 2.16 kg) which is higher than that of PLA1. Referring to Table 3 and Figure 1 it is seen that increasing the loading of the PLA-based PPA in the extrudable composition increased the rate that sharkskin was eliminated from the film. As the total concentration of the PPA in the composition increases from 500 to 1000, to 2000 and ultimately to 4000 ppm the percentage of sharkskin remaining after 1 hour reduces from 50.9%, to 20.9, 3.9 and 0% respectively. The extruder output increases between 6 and 8%. The consistency of the increase in output from the extruder for extrudable compositions of between 1000 and 4000 ppm of PLA is noteworthy. Higher loadings of PLA up to 4000 ppm did not cause screw surging or a reduction in output from the extruder. Composition E6 completely removed sharkskin within an hour. Looking at Figure 1 the rate of removal of sharkskin for composition E6 was faster than that of CE1.

Extrudable composition E7 is based on a PPA comprised of 3 parts of PLA1 to one part of PLA2. Comparing E2, E6 and E7 it appears that a PPA composition comprised of two PLAs (a first and second PLA) may clear sharkskin slightly faster than the single PLA1 at the same loading..

Comparing the performance of E1 and E5 it is observed that a PPA comprised of a blend of two PLAs at a 1:1 ratio at 2000 ppm in LLDPE appears to clear sharkskin more quickly than the single PLA1 at 2000 ppm in LLDPE.

Referring to Table 3 and Figure 2 it can be seen that composition E8, comprised of 2000 ppm of PHA1, is able to clear sharkskin in 40 minutes. The time to clear performance was superior to that of CE1 (FKM1 at 600ppm). The output is increased by 13% versus the LLDPE control, which is less that that of CE1. Although the extrudable composition E8 used a higher active loading of the PPA than that used in CE1, the PHA based PPA is effective, has favourable economics, is substantially fluorine and siloxane free, increases extruder output and the PHA is produced from renewable resources.

Referring to Table 3 and Figure 2 it can be seen that extrudable composition E8, comprised of 2000 ppm of PBAT1, is able to clear sharkskin in 60 minutes. The time to clear performance was comparable to that of CE1 (FKM1 at 600ppm). The output is increased by 18% versus the LLDPE control, which is less than the 26% increase in output for CE1. Although the extrudable composition E9 used a higher active loading of the PPA than that used in CE1, the PBAT based PPA is effective, has favourable economics, is substantially fluorine and siloxane free, and increases extruder output. Unfortunately, this film exhibited high haze, and so its use would not be favoured in high clarify film applications.

## Claims

1. Use of a first polyester or polyester copolymer as a polymer processing aid to reduce or remove melt fracture or die lip build-up in an extrudable polyolefin composition, wherein the polymer processing aid is used in an amount of from 0.01 to 1.0 weight%, based on the total weight of the polyolefin composition.

2. A method for reducing or removing melt fracture or die lip build-up in an extrudable polyolefin extrusion process comprising using a polyester or polyester copolymer as a polymer processing aid wherein the polymer processing aid is used in an amount of from 0.01 to 1.0 weight%, based on the total weight of the polyolefin composition.

3. An extrudable composition comprising a polyolefin; and a polymer processing aid which is present in an amount of from 0.01 to 1.0 weight-% based on the total weight of the polyolefin composition, and wherein the polymer processing aid comprises a first polyester or polyester copolymer.

4. A masterbatch composition comprising a polyolefin; and a polymer processing aid which is present in an amount of from 1 to 45 weight-% based on the total weight of the polyolefin composition, and wherein the polymer processing aid comprises a first polyester or polyester copolymer.

5. The use, method or composition of any preceding claim, further comprising a second polyester or polyester copolymer as a processing aid, the second polyester or polyester copolymer having a higher MFR than the first polyester or polyester copolymer, and wherein the first and second polyester or polyester copolymer are used in a combined amount of from 0.01 to 1.0 weight%, based on the total weight of an extrudable polyolefin composition or in a combined amount of from 1 to 45 weight % of a masterbatch composition.

6. The use, method or composition of any preceding claim, wherein the polymer processing aid is substantially free of fluorine and/or substantially free of siloxane.

7. The use, method or composition of any preceding claim, wherein the first polyester or polyester copolymer has a molecular weight of greater than 5,000 g/mol.

8. The use, method or composition of any preceding claim, wherein either the first polyester or polyester copolymer or the second polyester or polyester copolymer or both is a poly(lactic acid).

9. The use, method or composition of claim 8, wherein the poly(lactic acid) comprises greater than 80% of the L-isomer of lactic acid or lactide monomer.

10. The use, method or composition of any of claims 17, wherein either the first polyester or polyester copolymer or the second polyester or polyester copolymer or both are selected from the group comprising: polyhydroxyalkanoates, polyhydroxyalkanoate copolymers, poly(butylene adipate terephthalate).

11. The use, method or composition of any of claims 1 to 10 wherein the first polyester or polyester copolymer and the second polyester or polyester copolymer are present in the polymer processing aid in a ratio of from about 1:10 to about 10:1.

12. The use, method or composition as claimed in in any preceding claim further comprising 0.01 to 45 weight-% of the total composition of a synergist selected from a poly(oxy alkylene) or a polymeric liquid phosphite antioxidant.

13. The use, method or composition as claimed in any preceding claim, wherein the polyolefin is selected from a polyethylene, including a high-density polyethylene, linear low-density polyethylene or a low-density polyethylene, or a polypropylene, including a homopolymer polypropylene, random copolymer polypropylene, or a heterophasic impact copolymer polypropylene, or a combination thereof.

14. A use, method, or composition as claimed in any of claim 4 to 13, wherein the masterbatch composition further comprises one or more polymer additives selected from the following: hindered phenols, phosphites, metal stearates, hydrotalcites, zinc oxide, slip, anti-blocking, anti-static additives, and combinations thereof, wherein the one or more polymer additives are present in a combined amount of from 5 to 75 weight %, based on the total weight of the polyolefin composition.

15. An extruded polyolefin product whenever produced using the composition, method or uses of any of claims 1 to 14.

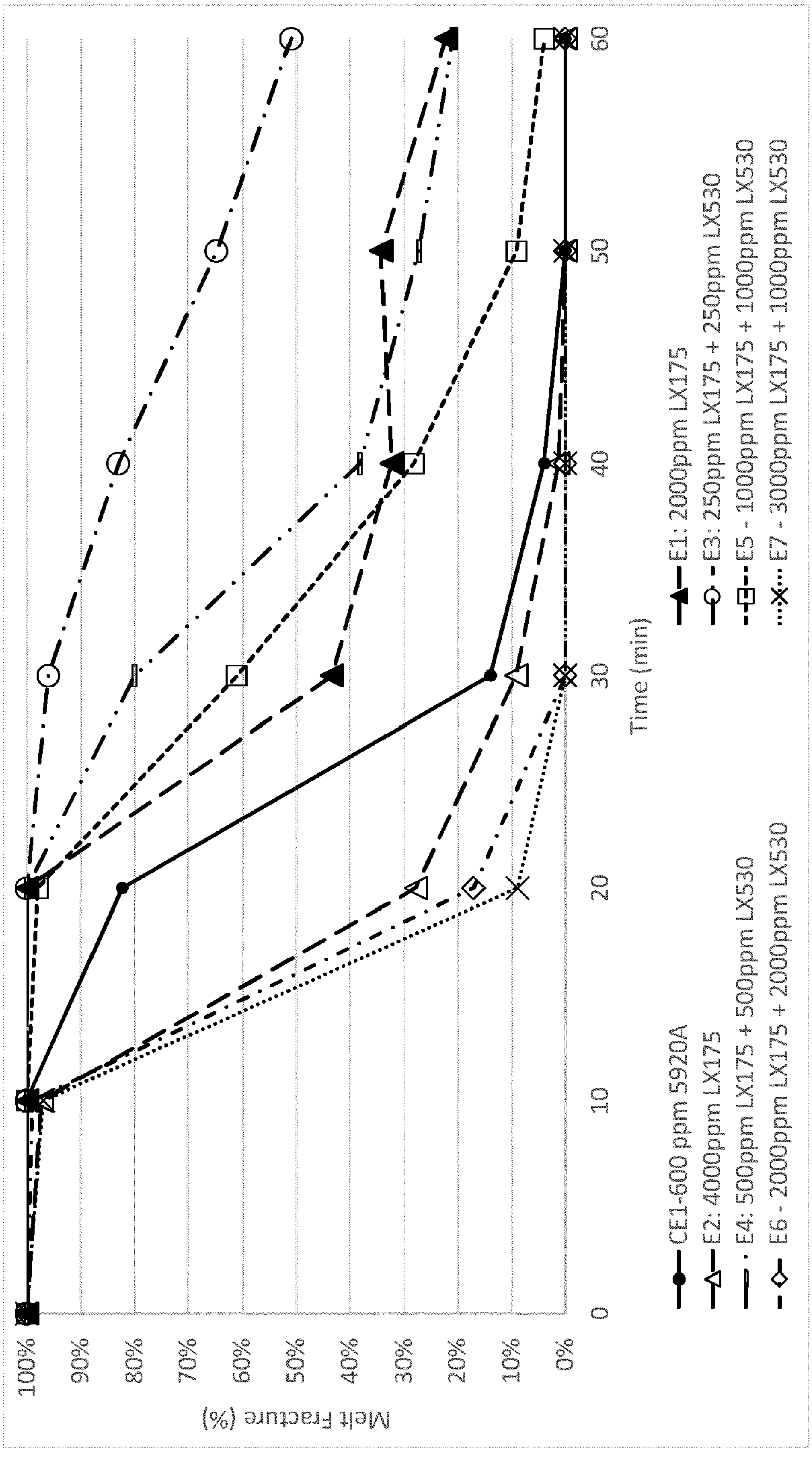
Melt Fracture (%)
100%
90%
80%
70%
60%
50%
40%
30%
20%
10%
0%
0
10
20
30
40
50
60
Time (min)
CE1-600 ppm 5920A
E2: 4000ppm LX175
E4: 500ppm LX175 + 500ppm LX530
E6 - 2000ppm LX175 + 2000ppm LX530
E1: 2000ppm LX175
E3: 250ppm LX175 + 250ppm LX530
E5 - 1000ppm LX175 + 1000ppm LX530
E7 - 3000ppm LX175 + 1000ppm LX530

Figure 1

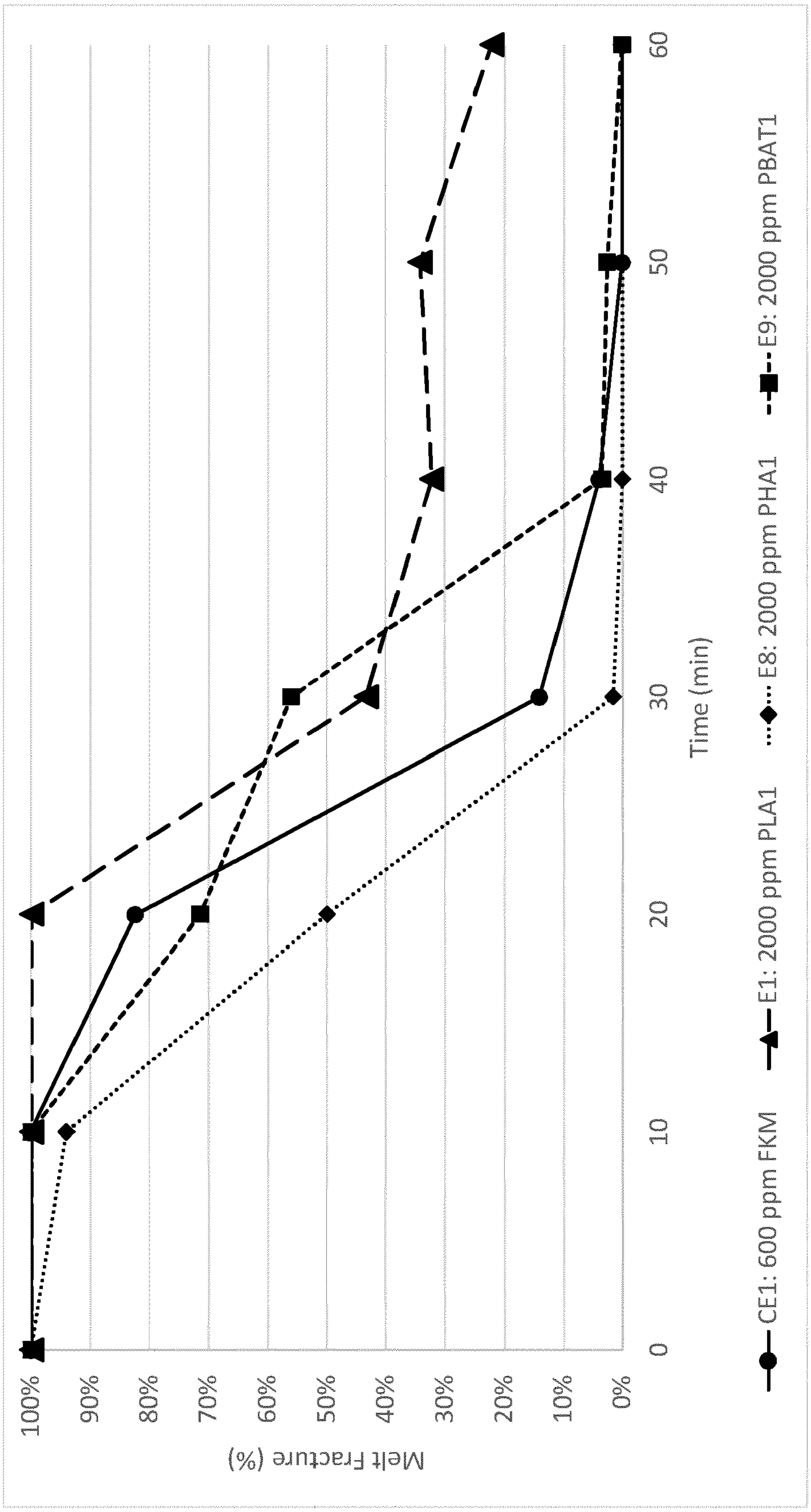
Melt Fracture (%)
100%
90%
80%
70%
60%
50%
40%
30%
20%
10%
0%
0
10
20
30
40
50
60
Time (min)
CE1: 600 ppm FKM
E1: 2000 ppm PLA1
E8: 2000 ppm PHA1
E9: 2000 ppm PBAT1

Figure 2

Europäisches Patentamt
European Patent Office
Office européen des brevets

# EUROPEAN SEARCH REPORT

Application Number
EP 23 18 3173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HONG Y ET AL: "Film blowing of linear low-density polyethylene blended with a novel hyperbranched polymer processing aid", POLYMER, ELSEVIER, AMSTERDAM, NL, vol. 41, no. 21, 22 May 2017 (2017-05-22), pages 7705-7713, XP085006387, ISSN: 0032-3861, DOI: 10.1016/S0032-3861(00)00130-0 | 1-7, 10-15 | INV. C08L23/0815 C08L23/00 |
| A | * the whole document * | 8,9 | |
| X | & YE HONG ET AL: "A novel processing aid for polymer extrusion: Rheology and processing of polyethylene and hyperbranched polymer blends", JOURNAL OF RHEOLOGY, SOCIETY OF RHEOLOGY, US, vol. 43, no. 3, 1 May 1999 (1999-05-01), pages 781-793, XP008180402, ISSN: 0148-6055, DOI: 10.1122/1.550999 | 1-7, 10-15 | |
| A | * the whole document * ----- | 8,9 | |
| | | | TECHNICAL FIELDS SEARCHED (IPC) |
| X | US 2003/220450 A1 (DILLON MARIA P [US] ET AL) 27 November 2003 (2003-11-27) | 1-5,7, 10-15 | C08L |
| A | * example 11; tables 5,6 * ----- | 6,8,9 | |
| X | CN 104 371 227 A (ZHEJIANG BILI PACKAGING CO LTD) 25 February 2015 (2015-02-25) | 1-5,7, 10-15 | |
| A | * the whole document * ----- | 6,8,9 | |
| X | WO 2023/089434 A1 (3M INNOVATIVE PROPERTIES COMPANY [US]) 25 May 2023 (2023-05-25) | 1-7, 10-15 | |
| A | * the whole document * ----- | 8,9 | |
| X | WO 2017/109114 A1 (DIANIA TECH LTD [IE]) 29 June 2017 (2017-06-29) | 1-5,7, 10-15 | |
| A | * the whole document * ----- | 6,8,9 | |

The present search report has been drawn up for all claims

1

| Place of search | Date of completion of the search | Examiner |
|---|---|---|
| Munich | 28 November 2023 | Balmer, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 18 3173

This annex lists the patent family members relating to the patent documents cited in the above-mentioned European search report. The members are as contained in the European Patent Office EDP file on
The European Patent Office is in no way liable for these particulars which are merely given for the purpose of information.

28-11-2023

| Patent document cited in search report | Publication date | Patent family member(s) | Publication date |
|---|---|---|---|
| US 2003220450 A1 | 27-11-2003 | AT E340228 T1 | 15-10-2006 |
| | | AU 2003220501 A1 | 12-12-2003 |
| | | BR 0309936 A | 09-02-2005 |
| | | CA 2485711 A1 | 04-12-2003 |
| | | CN 1656175 A | 17-08-2005 |
| | | DE 60308508 T2 | 21-06-2007 |
| | | EP 1506259 A1 | 16-02-2005 |
| | | JP 4436753 B2 | 24-03-2010 |
| | | JP 2005526895 A | 08-09-2005 |
| | | US 2003220450 A1 | 27-11-2003 |
| | | WO 03099935 A1 | 04-12-2003 |
| CN 104371227 A | 25-02-2015 | NONE | |
| WO 2023089434 A1 | 25-05-2023 | NONE | |
| WO 2017109114 A1 | 29-06-2017 | AU 2016374878 A1 | 05-07-2018 |
| | | BR 112018012908 A2 | 11-12-2018 |
| | | CA 3008077 A1 | 29-06-2017 |
| | | CN 108884359 A | 23-11-2018 |
| | | EP 3394189 A1 | 31-10-2018 |
| | | JP 2019506912 A | 14-03-2019 |
| | | US 2018244901 A1 | 30-08-2018 |
| | | WO 2017109114 A1 | 29-06-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3125547 A
- US 4855360 A
- US 6642310 B
- US 4535113 A
- US 5789473 A
- US 10982079 B2
- US 2023003100 A1
- US 8283415 B2
- US 8563637 B
- US 8981042 B


### Non-patent literature cited in the description


- Polymer Processing Additives for Melt Fracture Control. **HATZIKIRIAKOS, S. G.** ; **MIGLER, K. B.** Applied Polymer Rheology: Polymeric Fluids with Industrial Applications. 2012, 29-58
- *CHEMICAL ABSTRACTS*, 25322-68-3
- *CHEMICAL ABSTRACTS*, 24980-41-4
- *CHEMICAL ABSTRACTS*, 2082-79-3
- *CHEMICAL ABSTRACTS*, 6683-19-8
- *CHEMICAL ABSTRACTS*, 40601-76-1
- *CHEMICAL ABSTRACTS*, 27676-62-6
- *CHEMICAL ABSTRACTS*, 1709-70-2
- *CHEMICAL ABSTRACTS*, 31570-04-4
- *CHEMICAL ABSTRACTS*, 26741-53-7
- *CHEMICAL ABSTRACTS*, 38613-77-3
- *CHEMICAL ABSTRACTS*, 154862-43-8
- *CHEMICAL ABSTRACTS*, 112-84-5
- *CHEMICAL ABSTRACTS*, 301-02-0
- *CHEMICAL ABSTRACTS*, 112926-00-8
- *CHEMICAL ABSTRACTS*, 68855-54-9
- *CHEMICAL ABSTRACTS*, 37244-96-5
- *CHEMICAL ABSTRACTS*, 14807-96-6
- *CHEMICAL ABSTRACTS*, 1344-01-0
- *CHEMICAL ABSTRACTS*, 92704-41-1
- *CHEMICAL ABSTRACTS*, 31566-31-1
- **KOKAHCHI, AHMAD R** ; **AJJI, ABDELLAH** ; **CARREAU, PIERRE J**. Surface Morphology and Properties of Ternay Polymer Blends: Effect of the Migration of Minor Components. *J. Phys. Chem. B*, 2014, vol. 118, 6316-6323